(19) Europäisches Patentamt / European Patent Office / Office européen des brevets

(11) **EP 4 201 569 A1**

(12) **EUROPEAN PATENT APPLICATION**
published in accordance with Art. 153(4) EPC

(43) Date of publication:
**28.06.2023 Bulletin 2023/26**

(21) Application number: **21872455.7**

(22) Date of filing: **22.09.2021**

(51) International Patent Classification (IPC):
**B23H 7/02** *(2006.01)*  **B23H 7/36** *(2006.01)*
**B23Q 11/00** *(2006.01)*  **B23Q 11/10** *(2006.01)*
**B23Q 17/00** *(2006.01)*

(52) Cooperative Patent Classification (CPC):
**B23H 7/02; B23H 7/36; B23Q 11/00; B23Q 11/10;
B23Q 17/00**

(86) International application number:
**PCT/JP2021/034671**

(87) International publication number:
**WO 2022/065326 (31.03.2022 Gazette 2022/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.09.2020 JP 2020162035**

(71) Applicant: **FANUC CORPORATION
Oshino-mura
Minamitsuru-gun
Yamanashi 401-0597 (JP)**

(72) Inventors:
• **OOKUBO, Kousuke**
  **Minamitsuru-gun, Yamanashi 401-0597 (JP)**
• **YAMAOKA, Masahide**
  **Minamitsuru-gun, Yamanashi 401-0597 (JP)**
• **YAMAGUCHI, Meguru**
  **Minamitsuru-gun, Yamanashi 401-0597 (JP)**

(74) Representative: **Keil & Schaafhausen
Patentanwälte PartGmbB
Friedrichstraße 2-6
60323 Frankfurt am Main (DE)**

(54) **LIFETIME PREDICTION DEVICE AND MACHINE TOOL**

(57)     Provided is a lifetime prediction device and a machine tool that enable simple prediction of the lifetime of a filter while suppressing a prediction error with respect to a true value. A lifetime prediction device (88) according to one embodiment is provided with: a pressure acquisition unit (90) that acquires in time series a pressure value of a liquid applied to a filter (52); a time acquisition unit (92) that acquires processing time of a designated process; a calculation unit (94) that calculates the amount of pressure change during the processing time; and a prediction unit (96) that predicts a lifetime period before an upper limit value of the pressure of the liquid applied to the filter (52) is reached, by using the pressure value, the processing time, and the pressure change amount at the time of completion of the designated process.

FIG. 3

EP 4 201 569 A1

**Description**

TECHNICAL FIELD

The present invention relates to a lifetime prediction device and a machine tool.

BACKGROUND ART

As a machine tool, for example, there is an electric discharge machine that performs electrical discharge machining by applying a voltage across an electrode gap between an electrode and a workpiece (an object to be machined) in a dielectric working fluid stored in a work pan. In the electric discharge machine, sludge generated by electrical discharge machining is generated in the working fluid. For addressing this situation, a process of removing sludge in the working fluid by using a filter is executed.

When such sludge is accumulated in the filter, the filtering performance of the filter may be reduced, or the filter may be damaged due to an increased pressure of the working fluid applied to the filter. Therefore, it is necessary to replace the filter before such a situation occurs.

JP 2016-074057 A discloses a wire electric discharge machine that calculates the remaining time before the end of the filter's life is reached. This calculation is performed by using fluid pressure variation amounts of the filter that are correlated with parameters of machining conditions, machining material, machining thickness, wire diameter, wire material, and working fluid quality. In this calculation, the current fluid pressure detected by a sensor and the upper limit value of the fluid pressure are also used.

SUMMARY OF THE INVENTION

The parameters such as the machining conditions are set to values corresponding to the shape, dimensions, and the like of the workpiece to be machined. Accordingly, in JP 2016-074057 A, it is necessary to reset the parameters such as the above-mentioned machining conditions every time the shape, dimensions, and the like of the workpiece are changed. In this case, the operation tends to be cumbersome and complicated. On the other hand, if the parameters are not set to values corresponding to the shape, dimensions, or the like of the workpiece, the prediction error with respect to the true value tends to increase.

Thus, an object of the present invention is to provide a lifetime prediction device and a machine tool which are capable of easily predicting the lifetime of a filter while suppressing a prediction error with respect to its true value.

According to an aspect of the present invention, there is provided a lifetime prediction device that predicts a lifetime of a filter configured to filter a liquid used in a machine tool, the lifetime prediction device including:

a pressure acquisition unit configured to acquire a pressure value of the liquid applied to the filter in time sequence based on a signal output from a pressure sensor;
a time acquisition unit configured to acquire a machining time of a prescribed machining that is predetermined, based on information indicating an operating state of the machine tool;
a calculation unit configured to calculate an amount of pressure change during the machining time, based on the pressure value acquired in time sequence; and
a prediction unit configured to predict a lifetime which is a remaining time before a pressure of the liquid applied to the filter reaches an upper limit value, by using the pressure value at a time point when the prescribed machining has been completed, the machining time, and the amount of pressure change.

According to another aspect of the present invention, there is provided a machine tool including: the above lifetime prediction device; a machine main body configured to machine a workpiece using the liquid; and a liquid processing device including the filter.

According to the aspects of the present invention, it is possible to predict the lifetime of the filter reflecting the operating time during which the machine tool is actually operating and the pressure of the liquid applied to the filter. Therefore, regardless of whether or not parameters such as machining conditions are set, and regardless of the model of the machine tool, the predicted lifetime of the filter can be brought close to the true value. As a result, it is possible to easily predict the lifetime of the filter while suppressing the prediction error with respect to the true value.

BRIEF DESCRIPTION OF DRAWINGS

FIG. 1 is a schematic configuration diagram of a machine tool according to an embodiment;
FIG. 2 is a diagram showing a configuration of a part of the machine tool including a liquid processing device and a work pan;
FIG. 3 is a block diagram showing a control device;
FIG. 4 is a graph for explaining prediction of a lifetime;
FIG. 5 is a block diagram illustrating a control device according to a first modification;
FIG. 6 is a conceptual diagram showing how a workpiece is machined; and
FIG. 7 is a graph for explaining the prediction of the lifetime in a second modification.

DETAILED DESCRIPTION OF THE INVENTION

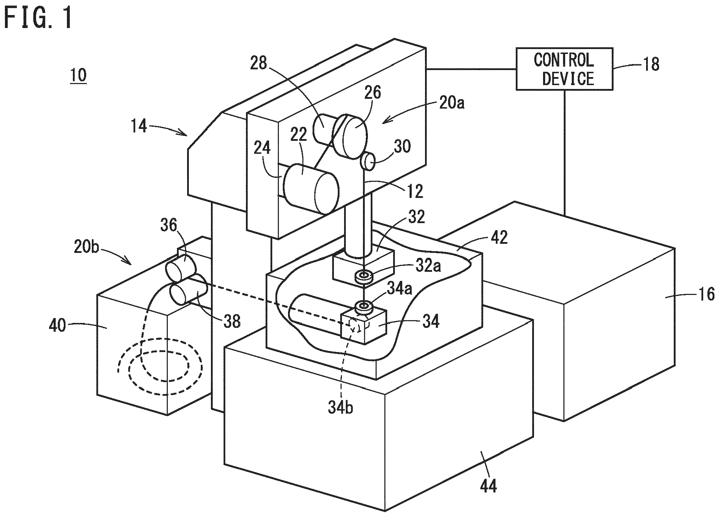

FIG. 1 is a schematic configuration diagram of a machine tool 10. The machine tool 10 is a wire electric discharge machine that performs electrical discharge machining on a workpiece (an object to be machined) (not shown) by electric discharge generated between a wire electrode 12 and the workpiece in a working fluid (liquid). The wire electrode 12 is formed of, for example, metal material such as tungsten-based, copper alloy-based, or brass-based material. On the other hand, the workpiece is formed of, for example, metal material such as iron-based material or superhard material (tungsten carbide).

The machine tool 10 mainly includes a machine main body 14 and a liquid processing device 16. The machine main body 14 includes a supplying system 20a and a collecting system 20b. The supplying system 20a supplies the wire electrode 12 toward the workpiece. The collecting system 20b collects the wire electrode 12 from the workpiece.

The supplying system 20a includes a wire bobbin 22, a torque motor 24, a brake shoe 26, a brake motor 28, a tension detector 30, and an upper wire guide 32. The wire electrode 12 is wound around the wire bobbin 22. The torque motor 24 applies a torque to the wire bobbin 22. The brake shoe 26 applies a frictional braking force to the wire electrode 12. The brake motor 28 applies a brake torque to the brake shoe 26. The tension detector 30 detects a magnitude of the tension of the wire electrode 12. The upper wire guide 32 guides the wire electrode 12.

The collecting system 20b includes a lower wire guide 34, a pinch roller 36, a feed roller 38, and a wire collection box 40. The lower wire guide 34 guides the wire electrode 12. The pinch roller 36 and the feed roller 38 hold the wire electrode 12 therebetween. The wire collection box 40 collects the wire electrode 12 conveyed by the pinch roller 36 and the feed roller 38.

The machine main body 14 includes a work pan (a work tank) 42 capable of storing a dielectric working fluid such as deionized water used during electrical discharge machining. The upper wire guide 32 and the lower wire guide 34 are disposed in the work pan 42. The work pan 42 is mounted on a base 44. The workpiece is provided between the upper wire guide 32 and the lower wire guide 34. The upper wire guide 32 has a die guide 32a for supporting the wire electrode 12. The lower wire guide 34 has a die guide 34a for supporting the wire electrode 12. The lower wire guide 34 includes a guide roller 34b that guides the wire electrode 12 to the pinch roller 36 and the feed roller 38 by changing the traveling direction of the wire electrode 12.

The workpiece is supported by a table (not shown) provided on the base 44. The table is disposed in the work pan 42. The machine main body 14 generates electric discharge between the wire electrode 12 and the workpiece in the working fluid stored in the work pan 42 while relatively moving the position of the table and the position of the wire electrode 12 supported by the die guides 32a, 34a.

The liquid processing device 16 removes sludge (machining chips) generated in the work pan 42 from the working fluid, and returns the working fluid from which the sludge has been removed, to the work pan 42. A control device 18 controls the machine main body 14 and the liquid processing device 16.

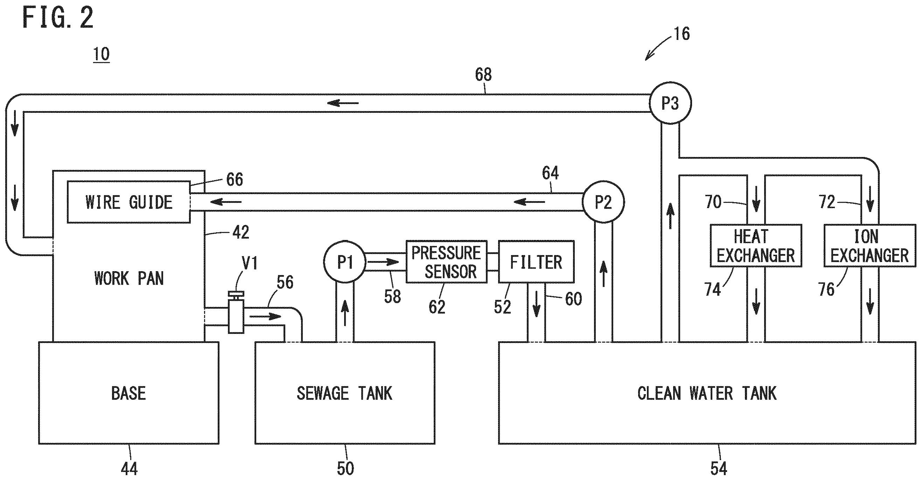

FIG. 2 is a diagram showing a configuration of a part of the machine tool 10 including the liquid processing device 16 and the work pan 42. The liquid processing device 16 at least includes a sewage tank 50, a filter 52, and a clean water tank 54. The sewage tank 50 temporarily stores the working fluid discharged from the work pan 42 through a discharge pipe 56. The discharge pipe 56 is a pipe through which the working fluid flows from the work pan 42 to the sewage tank 50. The discharge pipe 56 is provided with a valve V1. The valve V1 are opened and closed by an actuator (not shown).

Sludge generated by electrical discharge machining is mixed in the working fluid in the work pan 42. Therefore, the working fluid discharged from the work pan 42 to the sewage tank 50 contains sludge. That is, the sewage tank 50 temporarily stores the working fluid contaminated by sludge.

The working fluid stored in the sewage tank 50 is pumped up by a pump P1. The working fluid pumped up by the pump P1 is supplied to the filter 52 through a transfer pipe 58. The transfer pipe 58 is a pipe through which the working fluid flows from the sewage tank 50 to the filter 52. The transfer pipe 58 is provided with the pump P1.

The working fluid supplied to the filter 52 is filtered by the filter 52. The working fluid that has passed through the filter 52 is delivered to the clean water tank 54 through a transfer pipe 60. The filter 52 is a filter for removing sludge from the working fluid. The transfer pipe 60 is a pipe through which the working fluid having passed through the filter 52 flows into the clean water tank 54. The working fluid in the sewage tank 50 passes through the filter 52, so that the working fluid from which sludge has been removed can be delivered to the clean water tank 54. A pressure sensor 62 is provided in the transfer pipe 58 located upstream of the filter 52. The pressure sensor 62 detects the pressure of the working fluid applied to the filter 52. The pressure sensor 62 may be provided in the transfer pipe 60 located downstream of the filter 52, instead of the transfer pipe 58 located upstream of the filter 52.

The clean water tank 54 temporarily stores the working fluid from which sludge has been removed. The working fluid stored in the clean water tank 54 is pumped up by a pump P2. The working fluid pumped up by the pump P2 is sent to a wire guide 66 through a first water supply pipe 64. The first water supply pipe 64 is a pipe through which the working fluid stored in the clean water tank 54 flows to the wire guide 66. The first water supply pipe 64 is provided with the pump P2.

The wire guide 66 means at least one of the upper wire guide 32 or the lower wire guide 34. The wire guide 66 has an ejection portion for ejecting the working fluid from which the sludge has been removed. Since the electrical discharge machining is performed while the working fluid is ejected from the wire guide 66, a space between the wire electrode 12 and the workpiece can be filled with the clean working fluid suitable for the electrical discharge machining. As a result, it is possible to prevent the accuracy of the electrical discharge machining from being lowered by the sludge.

The working fluid stored in the clean water tank 54 is pumped up by a pump P3. The working fluid pumped up by the pump P3 is supplied to the work pan 42 through a second water supply pipe 68. The second water supply pipe 68 is a pipe through which the working fluid stored in the clean water tank 54 flows into the work pan 42. The second water supply pipe 68 is provided with the pump P3.

The second water supply pipe 68 has a first branch pipe 70 and a second branch pipe 72 which branch therefrom. The first branch pipe 70 returns the working fluid to the clean water tank 54. The first branch pipe 70 is provided with a heat exchanger 74. The heat exchanger 74 adjusts the temperature of the working fluid. This makes it possible to appropriately manage the temperature of the working fluid supplied to the work pan 42. The second branch pipe 72 is provided with an ion exchanger 76. The ion exchanger 76 adjusts the electric resistivity and the like of the working fluid. This makes it possible to appropriately manage the liquid quality of the working fluid supplied to the work pan 42.

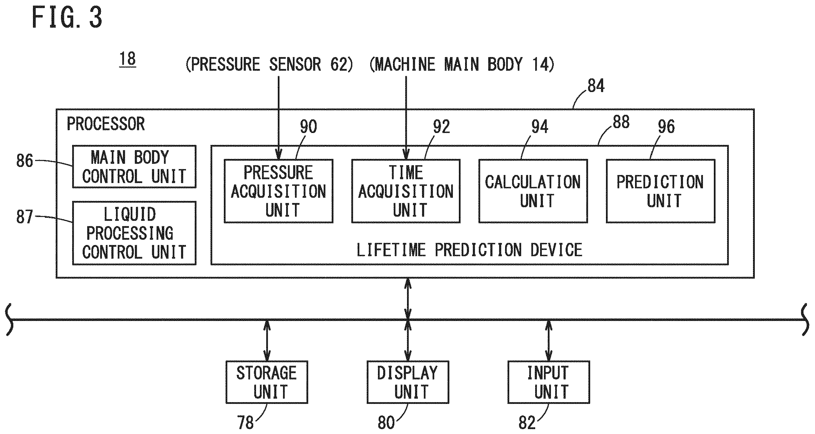

FIG. 3 is a block diagram showing the control device 18. The control device 18 includes a storage unit 78 that stores information, a display unit 80 that displays information, an input unit 82 that is used to input information, and a processor 84 that processes information.

The storage unit 78 is equipped with a volatile memory and a nonvolatile memory, neither of which are shown. Examples of the volatile memory include a RAM (random access memory) or the like. Examples of the nonvolatile memory include a ROM (read only memory), a flash memory, or the like. At least a part of the storage unit 78 may be provided in the processor 84 or the like. The storage unit 78 may further include a hard disk or the like. Specific examples of the display unit 80 include a liquid crystal display, for example. Specific examples of the input unit 82 include a mouse, a keyboard, and the like. The input unit 82 may be configured by a touch panel or the like disposed on the display screen of the display unit 80. Specific examples of the processor 84 include a CPU (central processing unit), a GPU (graphics processor unit), and the like. The processor 84 includes a main body control unit 86 that controls the machine main body 14 and a liquid processing control unit 87 that controls the liquid processing device 16.

The main body control unit 86 reads a machining program stored in the storage unit 78, and executes feed control, voltage control, and movement control in accordance with the read machining program.

When executing the feed control, the main body control unit 86 controls a feed motor of the machine main body 14 (FIG. 1) such that the wire electrode 12 (FIG. 1) travels at a predetermined speed along the traveling direction in which the wire electrode 12 extends. When executing the voltage control, the main body control unit 86 controls a power supply unit of the machine main body 14 such that a pulse voltage is supplied to the electrode gap between the wire electrode 12 and the workpiece placed on the table. When executing the movement control, the main body control unit 86 controls a motor such that the wire electrode 12 moves relative to the workpiece placed on the table in a direction orthogonal to the traveling direction of the wire electrode 12. The controlled motor includes at least one of a motor that drives the upper wire guide 32 (FIG. 1), a motor that drives the lower wire guide 34 (FIG. 1), or a motor that drives the table.

The liquid processing control unit 87 controls the actuator connected to the valve V1 (FIG. 2) and the pumps P1 to P3 (FIG. 2) such that the working fluid circulates between the work pan 42 and the liquid processing device 16.

A lifetime prediction device 88 that predicts the lifetime of the filter 52 is incorporated in the processor 84 of the present embodiment. The lifetime prediction device 88 may not be incorporated in the processor 84. In a case where the lifetime prediction device 88 is not incorporated in the processor 84, it is incorporated in a processor such as a general-purpose personal computer disposed outside the control device 18. In this case, the processor of the general-purpose personal computer or the like and the processor 84 of the control device 18 can exchange information via a communication path. The lifetime prediction device 88 includes a pressure acquisition unit 90, a time acquisition unit 92, a calculation unit 94, and a prediction unit 96.

The pressure acquisition unit 90 acquires a pressure value in time sequence, based on signals output from the pressure sensor 62. The pressure value acquired by the pressure acquisition unit 90 is a value indicating the pressure (filter pressure) of the working fluid applied to the filter 52. This pressure value changes according to the amount of sludge accumulated in the filter 52, and the like. When acquiring the pressure value, the pressure acquisition unit 90 stores the acquired pressure value in the storage unit 78.

The time acquisition unit 92 acquires a predetermined machining time of a prescribed machining, based on information indicating the operating state of the machine tool 10. In the present embodiment, the prescribed machining is a machining that is performed in one machining cycle from the start of machining of one workpiece to the end of the machining. By analyzing the machining program executed by the main body control unit 86, the time acquisition unit 92 can acquire at least one cycle time (the start time point and the end time point) of the machining cycle which is repeated in the machine main body 14 based on the machining program.

The calculation unit 94 calculates the amount of change in pressure during the machining time acquired by the time acquisition unit 92, based on the pressure values acquired in time sequence by the pressure acquisition unit 90. The calculation unit 94 detects the pressure value at the start time point of at least one cycle time acquired by the time acquisition unit 92 and the pressure value at the end time point of that cycle time, from the time-series pressure values stored in the storage unit 78. The calculation unit 94 can calculate the amount of change in pressure during at least one cycle time acquired by the time acquisition unit 92, by subtracting the detected pressure value at the start time point from the detected pressure value at the end time point.

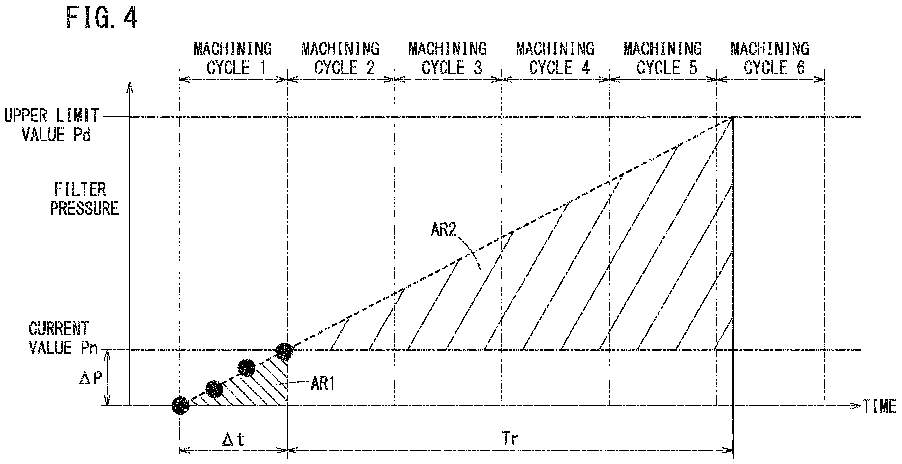

The prediction unit 96 predicts a lifetime which is a remaining time before the pressure (filter pressure) of the working fluid applied to the filter 52 reaches an upper limit. As shown in FIG. 4, the prediction unit 96 predicts the lifetime Tr by using the pressure value Pn at the end of the machining cycle, the machining time $\Delta t$ of the machining cycle, and the amount of pressure change $\Delta P$ during the machining time $\Delta t$. The pressure value Pn is acquired by the pressure acquisition unit 90. The machining time $\Delta t$ is acquired by the time acquisition unit 92. The amount of pressure change $\Delta P$ is calculated by the calculation unit 94. FIG. 4 shows an example in which the lifetime Tr is predicted at the end of the first machining cycle. In addition, black circles in FIG. 4 indicate pressure values acquired by the pressure acquisition unit 90 during the first machining cycle.

When it is assumed that the amount of change in the filter pressure per unit time is constant, a region AR1 that is hatched with negatively sloped lines in the drawing and a region AR2 that is hatched with positively sloped lines in the drawing are similar triangles. In the similar triangles, the ratio of the lengths of the corresponding sides is the same, and accordingly the relationship of the following equation (1) is established.

$$\Delta t : Tr = \Delta P : (Pd - Pn) \ldots (1)$$

From the above equation (1), the lifetime Tr is expressed by the following equation (2).

$$Tr = \frac{(Pd - Pn) \times \Delta t}{\Delta P} \ldots (2)$$

In this way, the prediction unit 96 subtracts the pressure value Pn at the time point when the prescribed machining (machining cycle) has ended from the upper limit value Pd of the filter pressure. Further, the prediction unit 96 multiplies the subtraction result by the machining time $\Delta t$, and divides the value obtained as a result of the multiplication, by the amount of pressure change $\Delta P$. Thus, the prediction unit 96 can predict the lifetime Tr.

The prediction unit 96 may predict the lifetime Tr each time the prescribed machining (machining cycle) is repeated. In this case, the prediction unit 96 obtains the difference between the previous amount of pressure change $\Delta P$ and the current amount of pressure change $\Delta P$. Here, when the difference between the previous amount of pressure change $\Delta P$ and the current amount of pressure change $\Delta P$ is equal to or greater than a specified value, the prediction unit 96 re-predicts the lifetime Tr using Equation (2) described above. On the other hand, when the difference between the previous amount of pressure change $\Delta P$ and the current amount of pressure change $\Delta P$ is less than the specified value, the prediction unit 96 sets the lifetime Tr previously predicted as the lifetime Tr to be currently predicted.

In this way, the lifetime prediction device 88 predicts the lifetime Tr by using the pressure value Pn at the time point when the prescribed machining (machining cycle) has ended, the machining time $\Delta t$ of the prescribed machining (machining cycle), and the amount of pressure change $\Delta P$ during the machining time $\Delta t$. This makes it possible to predict the lifetime of the filter 52 reflecting the operating time during which the machine tool 10 is actually operating and the filter pressure during the operating time. Therefore, regardless of whether or not parameters such as machining conditions are set, and regardless of the model of the machine tool 10, the predicted lifetime of the filter 52 can be brought close to the true value. As a result, it is possible to easily predict the lifetime of the filter 52 while suppressing the prediction error with respect to the true value.

Further, the lifetime prediction device 88 predicts the lifetime Tr by calculation as follows. That is, the lifetime prediction device 88 subtracts the pressure value Pn at the time point when the prescribed machining (machining cycle) has ended, from the upper limit value Pd of the filter pressure, multiplies the subtraction result by the machining time $\Delta t$, and then divides the multiplication result by the amount of pressure change $\Delta P$. Accordingly, the number of times of the four arithmetic operations for predicting the lifetime Tr can be three, and thus the processing load can be reduced as compared with the case where the number of times of the four arithmetic operations is larger than three.

In a case where the lifetime prediction device 88 predicts the lifetime Tr each time the prescribed machining (machining cycle) is repeated, the lifetime prediction device 88 can finely grasp a change in the lifetime Tr.

The present embodiment can be modified as follows.

[Modification 1]

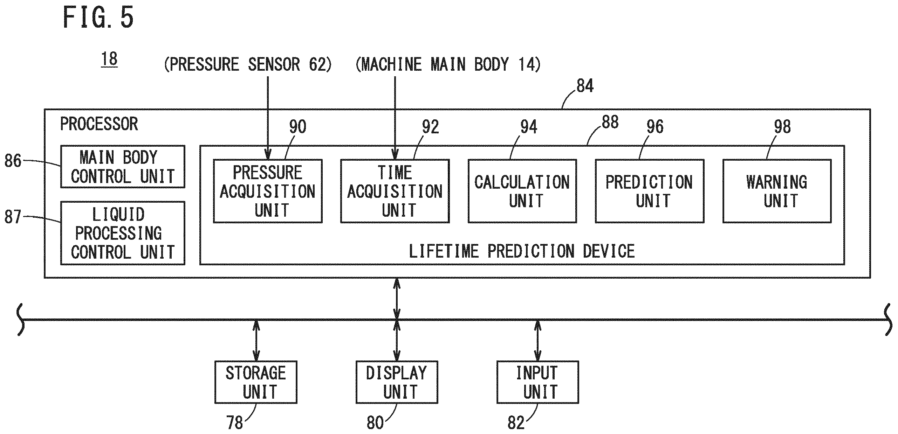

FIG. 5 is a block diagram illustrating a control device 18 according to a first modification. In FIG. 5, the same reference numerals are used to designate constituent elements that are the same as those described in the embodiment. Moreover, in Modification 1, descriptions that overlap or are duplicative of those stated in the embodiment will be omitted. In the case of the control device 18 according to the first modification, a warning unit 98 is newly provided in the lifetime prediction device 88.

The warning unit 98 gives a warning if the lifetime Tr predicted by the prediction unit 96 is shorter than a specified time period. This makes it possible to prompt the operator to replace the filter 52.

In a case where the lifetime prediction device 88 includes at least one of a display unit, a speaker, or a light emitter, the warning unit 98 may use at least one of the display unit, the speaker, or the light emitter to give a warning. Alternatively, in a case where an external device including at least one of a display unit, a speaker, or a light emitter is connected to the lifetime prediction device 88, the warning unit 98 may send an operating signal to the external device to thereby give a warning.

[Modification 2]

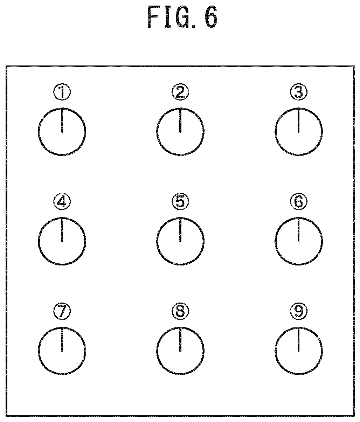

FIG. 6 is a conceptual diagram showing how a workpiece is machined. In the machine tool 10 (the machine main body 14), there are cases where one machining cycle may include a step of machining one workpiece such that the same shapes are sequentially formed at respective different positions on the one workpiece. FIG. 6 illustrates a case in which machining is performed to sequentially form the same shapes at nine positions on one workpiece.

In this case, the time acquisition unit 92 may regard a shape machining as the prescribed machining, instead of regarding the machining cycle as the prescribed machining in the above embodiment. The time acquisition unit 92 can acquire a machining time (start time point and end time point) for forming at least one of the nine same shapes, by analyzing the machining program executed by the main body control unit 86.

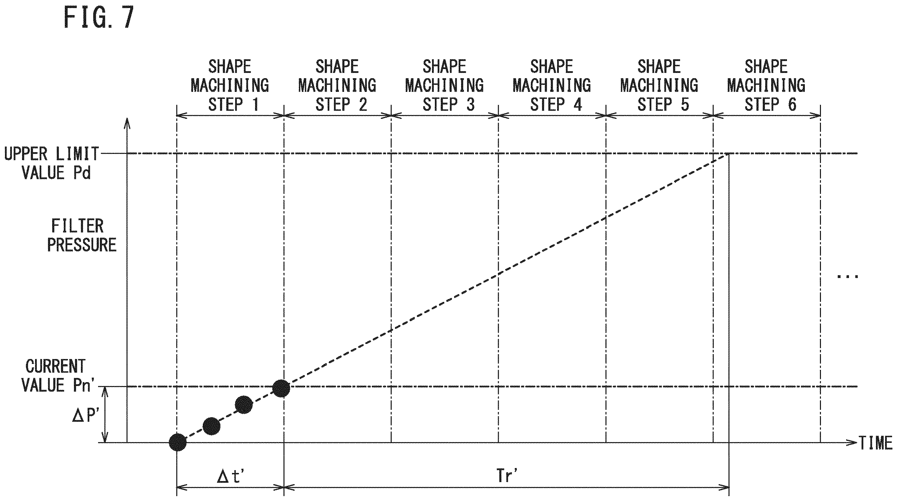

As shown in FIG. 7, the prediction unit 96 can predict the lifetime Tr' by using the above-described equation (2) even when the shape machining is regarded as the prescribed machining. That is, the prediction unit 96 subtracts the pressure value Pn' at the time point when the prescribed machining (shape machining) has been completed, from the upper limit value Pd of the filter pressure, multiplies the subtraction result by the machining time $\Delta t'$, and then divides the value obtained by the multiplication, by the amount of pressure change $\Delta P'$.

[Modification 3]

There are cases where one machining cycle may include a rough machining step of removing an unnecessary portion while leaving a portion (machining allowance) to be machined at the time of finish machining and a finish machining step of removing the machining allowance. In this case, the time acquisition unit 92 may regard the rough machining or the finish machining as the prescribed machining instead of regarding the machining cycle as the prescribed machining. Even in this case, similarly to the embodiment, the prediction unit 96 can predict the lifetime using the above-described equation (2).

[Modification 4]

The machine tool 10 may be a die-sinking electric discharge machine that performs electrical discharge machining on a workpiece by electric discharge generated between an electrode for die-sinking and the workpiece. The die-sinking electric discharge machine performs machining on a workpiece while relatively moving the position of a table disposed in the work pan 42 and the position of the electrode for die-sinking. When the machine tool 10 is such a die-sinking electric discharge machine, the supplying system 20a and the collecting system 20b are eliminated, and an actuator for moving the position of the electrode for die-sinking is provided.

[Modification 5]

The lifetime prediction device 88 may predict the lifetime of a filter provided in the machine tool 10 other than the electric discharge machine. For example, the lifetime prediction device 88 may predict the lifetime of a filter that filters coolant sprayed to the contact portion between a tool and a workpiece. Examples of the machine tool 10 including such a filter include a lathe machine or the like that machines a workpiece using a tool.

[Modification 6]

The lifetime prediction device 88 may predict the lifetime Tr by using a relational equation other than the above equation (2). For example, the lifetime prediction device 88 may predict the lifetime Tr using the following equation (3). "N" in the following equation (3) is the number of times (natural number) of the prescribed machining repeatedly executed from the prediction time point until when the filter pressure reaches the upper limit (upper limit value Pd).

$$Tr = \Delta t \times N + (Pd - Pn - \Delta P \times N)/(\Delta P/\Delta t) \quad \dots \quad (3)$$

[Modification 7]

The above-described embodiment and Modifications 1 to 6 may be optionally combined within a range in which no technical inconsistencies occur.
The first and second inventions are described below as inventions that can be grasped from the above embodiment and modifications.

(First Invention)

The first invention is characterized by the lifetime prediction device (88) that predicts the lifetime of the filter (52) that filters a liquid used in the machine tool (10), the lifetime prediction device (88) including: the pressure acquisition unit (90) configured to acquire the pressure value of the liquid applied to the filter in time sequence based on a signal output from the pressure sensor (62); the time acquisition unit (92) configured to acquire the machining time ($\Delta t$, $\Delta t'$) of the prescribed machining that is predetermined, based on information indicating the operating state of the machine tool; the calculation unit (94) configured to calculate the amount of pressure change ($\Delta P$, $\Delta P'$) during the machining time, based on the pressure value acquired in time sequence; and the prediction unit (96) configured to predict the lifetime (Tr, Tr') which is the remaining time before the pressure of the liquid applied to the filter reaches the upper limit value (Pd), by using the pressure value (Pn, Pn') at the time point when the prescribed machining has been completed, the machining time, and the amount of pressure change.
This makes it possible to predict the lifetime of the filter reflecting the operating time during which the machine tool is actually operating and the filter pressure during the operating time. Therefore, regardless of whether or not parameters such as machining conditions are set and regardless of the model of the machine tool, it is possible to bring the predicted lifetime of the filter closer to the true value. As a result, it is possible to easily predict the lifetime of the filter while suppressing a prediction error with respect to the true value.
The prediction unit may predict the lifetime by subtracting the pressure value at the time point when the prescribed machining has been completed, from the upper limit value, and dividing a value obtained by multiplying a subtraction result by the machining time, by the amount of pressure change. Accordingly, the number of times of the four arithmetic operations for predicting the lifetime can be three, and thus the processing load can be reduced as compared with the case where the number of times of the four arithmetic operations is larger than three.
The prediction unit may predict the lifetime each time the prescribed machining is repeated. With this configuration, the change in the lifetime can be finely grasped.
In a case where the difference between the previous amount of pressure change and the current amount of pressure change is equal to or greater than a specified value, the prediction unit may re-predict the lifetime, and in a case where the difference is less than the specified value, the prediction unit may set the previously predicted lifetime as the currently predicted lifetime. With this configuration, it is possible to reduce the processing load compared to a case where the lifetime is predicted again (re-predicted) even when the difference between the previous amount of pressure change and the current amount of pressure change is less than the specified value.
The lifetime prediction device may further include a warning unit (98) configured to give a warning when the predicted lifetime is shorter than a specified time period. This makes it possible to prompt the operator to replace the filter.
The prescribed machining may be a machining that is performed in one machining cycle from start of machining of one workpiece to end of the machining. This makes it possible to grasp, the lifetime when the machining cycle is performed.

The prescribed machining may be a machining in which the same shape is repeatedly formed on one workpiece. With this configuration, it is possible to grasp the lifetime when machining is performed to form the shape on the workpiece.

The prescribed machining may be a rough machining or a finish machining. This makes it possible to grasp the lifetime when the rough machining or the finish machining is performed.

(Second Invention)

The second invention is characterized by the machine tool including: the above lifetime prediction device; the machine main body (14) configured to machine a workpiece using the liquid; and the liquid processing device (16) including the filter.

Since the lifetime prediction device is provided, it is possible to easily predict the lifetime of the filter while suppressing a prediction error with respect to the true value.

The machine main body may be configured to perform electrical discharge machining by applying a voltage across the electrode gap between the electrode and the workpiece in the working fluid stored in the work pan (42), and the filter may be configured to remove sludge generated by the electrical discharge machining and being present in the working fluid stored in the work pan. With this configuration, it is possible to prevent the filter from reaching the time for replacement during the electrical discharge machining.

**Claims**

1. A lifetime prediction device (88) that predicts a lifetime of a filter (52) configured to filter a liquid used in a machine tool (10), the lifetime prediction device (88) comprising:

   a pressure acquisition unit (90) configured to acquire a pressure value of the liquid applied to the filter in time sequence based on a signal output from a pressure sensor (62);
   a time acquisition unit (92) configured to acquire a machining time ($\Delta t$, $\Delta t'$) of a prescribed machining that is predetermined, based on information indicating an operating state of the machine tool;
   a calculation unit (94) configured to calculate an amount of pressure change ($\Delta P$, $\Delta P'$) during the machining time, based on the pressure value acquired in time sequence; and
   a prediction unit (96) configured to predict a lifetime (Tr, Tr') which is a remaining time before a pressure of the liquid applied to the filter reaches an upper limit value (Pd), by using the pressure value (Pn, Pn') at a time point when the prescribed machining has been completed, the machining time, and the amount of pressure change.

2. The lifetime prediction device according to claim 1, wherein
   the prediction unit predicts the lifetime by subtracting the pressure value at the time point when the prescribed machining has been completed, from the upper limit value, and dividing a value obtained by multiplying a subtraction result by the machining time, by the amount of pressure change.

3. The lifetime prediction device according to claim 1 or 2, wherein
   the prediction unit predicts the lifetime each time the prescribed machining is repeated.

4. The lifetime prediction device according to claim 3, wherein
   in a case where a difference between the amount of pressure change previously calculated and the amount of pressure change currently calculated is equal to or greater than a specified value, the prediction unit re-predicts the lifetime, and in a case where the difference is less than the specified value, the prediction unit sets the lifetime previously predicted as the lifetime currently predicted.

5. The lifetime prediction device according to any one of claims 1 to 4, further comprising:
   a warning unit (98) configured to give a warning when the predicted lifetime is shorter than a specified time period.

6. The lifetime prediction device according to any one of claims 1 to 5, wherein
   the prescribed machining is a machining that is performed in one machining cycle from start of machining of one workpiece to end of the machining.

7. The lifetime prediction device according to any one of claims 1 to 5, wherein

the prescribed machining is a machining in which a same shape is repeatedly formed on one workpiece.

8. The lifetime prediction device according to any one of claims 1 to 5, wherein
   the prescribed machining is a rough machining or a finish machining.

9. A machine tool comprising:

   the lifetime prediction device according to any one of claims 1 to 8;
   a machine main body (14) configured to machine a workpiece using the liquid; and
   a liquid processing device (16) including the filter.

10. The machine tool according to claim 9, wherein

   the machine main body is configured to perform electrical discharge machining by applying a voltage across an electrode gap between an electrode and the workpiece in a working fluid stored in a work pan (42), and
   the filter is configured to remove sludge generated by the electrical discharge machining and being present in the working fluid stored in the work pan.

FIG. 1

# FIG. 2

EP 4 201 569 A1

EP 4 201 569 A1

## FIG. 3

18    (PRESSURE SENSOR 62)    (MACHINE MAIN BODY 14)

84

PROCESSOR

86 — MAIN BODY CONTROL UNIT

87 — LIQUID PROCESSING CONTROL UNIT

90 — PRESSURE ACQUISITION UNIT

92 — TIME ACQUISITION UNIT

94 — CALCULATION UNIT

88

96 — PREDICTION UNIT

LIFETIME PREDICTION DEVICE

STORAGE UNIT
78

DISPLAY UNIT
80

INPUT UNIT
82

## FIG. 4

EP 4 201 569 A1

FIG. 5

PROCESSOR

18 (PRESSURE SENSOR 62) (MACHINE MAIN BODY 14)

86 — MAIN BODY CONTROL UNIT

87 — LIQUID PROCESSING CONTROL UNIT

90 PRESSURE ACQUISITION UNIT

92 TIME ACQUISITION UNIT

94 CALCULATION UNIT

88 96 PREDICTION UNIT

98 WARNING UNIT

84

LIFETIME PREDICTION DEVICE

STORAGE UNIT 78

DISPLAY UNIT 80

INPUT UNIT 82

EP 4 201 569 A1

FIG. 6

FIG. 7

## INTERNATIONAL SEARCH REPORT

International application No.

**PCT/JP2021/034671**

### A. CLASSIFICATION OF SUBJECT MATTER

***B23H 7/02***(2006.01)i; ***B23H 7/36***(2006.01)i; ***B23Q 11/00***(2006.01)i; ***B23Q 11/10***(2006.01)i; ***B23Q 17/00***(2006.01)i
FI: B23H7/36 Z; B23H7/02 A; B23H7/02 R; B23Q17/00 A; B23Q11/10 E; B23Q11/00 U

According to International Patent Classification (IPC) or to both national classification and IPC

### B. FIELDS SEARCHED

Minimum documentation searched (classification system followed by classification symbols)

B23H7/02; B23H7/36; B23Q11/00; B23Q11/10; B23Q17/00

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | US 2018/0266935 A1 (AGIE CHARMILLES SA) 20 September 2018 (2018-09-20) paragraphs [0033], [0035], [0080]-[0117], fig. 1 | 1, 3, 5-10 |
| A | paragraphs [0080]-[0117], fig. 1 | 2, 4 |
| A | JP 2002-283146 A (FANUC LTD) 03 October 2002 (2002-10-03) paragraphs [0024]-[0026] | 1-10 |

☐ Further documents are listed in the continuation of Box C.　　☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **15 November 2021** | **30 November 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT
### Information on patent family members

| International application No. |
| --- |
| **PCT/JP2021/034671** |

| Patent document cited in search report | | | Publication date (day/month/year) | Patent family member(s) | | | Publication date (day/month/year) |
| --- | --- | --- | --- | --- | --- | --- | --- |
| US | 2018/0266935 | A1 | 20 September 2018 | EP 3375556 A1 paragraphs [0020], [0022], [0041]-[0067], fig. 1 CN 108627439 A paragraphs [0023], [0025], [0059]-[0081], fig. 1 | | | |
| JP | 2002-283146 | A | 03 October 2002 | US 2002/0134759 A1 paragraphs [0033]-[0036] EP 1243372 A2 paragraphs [0026]-[0029] | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016074057 A